Europäisches Patentamt

European Patent Office

Office européen des brevets

(19)

(11) **EP 1 489 754 A1**

(12) **EUROPEAN PATENT APPLICATION**

(43) Date of publication:
**22.12.2004 Bulletin 2004/52**

(51) Int Cl.⁷: **H04B 1/69**

(21) Application number: **04011561.0**

(22) Date of filing: **14.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **19.06.2003 KR 2003039846**

(71) Applicant: **Samsung Electronics Co., Ltd.**
**Suwon-si, Gyeonggi-do (KR)**

(72) Inventors:
• **Lee, Woo-kyung**
**Daejeon-city (KR)**

• **Kim, Yong-suk**
**Daejeon-city (KR)**
• **Kim, Wan-jin**
**Seoul (KR)**
• **Lee, Ye-hoon**
**Paldal-gu Suwon-city Gyunggi-do (KR)**

(74) Representative: **Grünecker, Kinkeldey,**
**Stockmair & Schwanhäusser Anwaltssozietät**
**Maximilianstrasse 58**
**80538 München (DE)**

(54) **UWB wireless transmitter and receiver using UWB linear FM signals and method thereof**

(57)     An ultra wideband (UWB) wireless transmitter includes a first pulse generator for modulating data to be transmitted and outputting a first linear modulated signal, a second pulse generator for modulating the data to be transmitted and outputting a second linear modulated signal, an adder for adding the first and the second linear modulated signals, a pulse shaper for shaping the signal output from the adder, a carrier generator for outputting a carrier, a mixer for mixing the signal output from the pulse shaper with the carrier, a transmission unit for transmitting the signal output from the mixer, and a controller for controlling the modulation of the signal to be transmitted by controlling the operation of the first and the second pulse generators and the carrier generator. As a result, a data transmission rate can be greatly increased with very little inter-pulse interference even when the pulse intervals are reduced.

FIG. 4

EP 1 489 754 A1

## Description

This application claims the priority of Korean Patent Application No. 10-2003-0039846 filed on June 19, 2003, in the Korean Intellectual Property Office, the disclosure of which is incorporated herein in its entirety by reference.

BACKGROUND

1. Field of the invention

The present invention relates to an ultra wideband (UWB) wireless transmitter and receiver using a UWB linear frequency modulated (FM) signal, and more particularly, to an UWB wireless transmitter and receiver capable of minimizing inter-pulse interference while increasing transmission rate using two independent UWB linear FM signals, and a method thereof.

2. Description of the Related Art

In the ultra wideband (UWB), dynamic frequency is currently set from 3.1 to 10.6GHz. In the UWB environment, which uses a large frequency range, the entire frequency band is subdivided into one or a limited number of sub-bands for use. Also used is a wave packet type waveform in which signals exist only in a predetermined time domain instead of continuous waveforms all over the entire time domain.

In a single band environment which uses a signal frequency band, an impulse using all of the frequencies in the UWB is used as a transmission/reception signal. However, the signal band approach has a drawback that it is weak to inter-system interference.

In an attempt to resolve such a drawback of the single band approach, a multi-band approach has been suggested. According to the multi-band approach, the system can use several sub-bands as necessary and can efficiently deal with the interference-related problems. However, because the pulse width is widened, inter-pulse interference in the temporal axis increases.

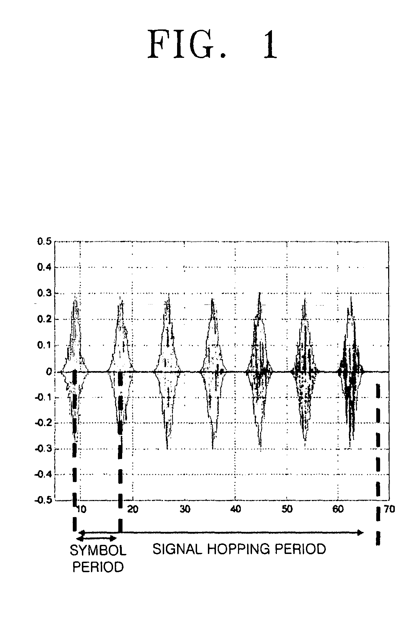

FIG. 1 is a view illustrating a pulse waveform appearing in the time domain of the conventional multiband system.

Referring to FIG. 1, there are several transmission signals using different frequency bands, being sequentially arranged on the temporal axis. The frequency range can be set by the user, but more than 7 or 8 bands have to be used in order to satisfy the minimum performance of 110 Mbs which is proposed by the UWB Standard.

If the signals of the same frequency band overlap, the signals cannot be distinguished from one another. Accordingly, it is impossible to recover the signals precisely when the signals are delayed due to multi-path environment and overlapped with each other. In order to avoid this phenomenon, a sufficient period has to be allocated for the re-transmission of the same signal so that the signals may not overlap. However, if the interval between the signals is widened, the number of pulse per time unit is reduced, and as a result, transmission rate is decreased.

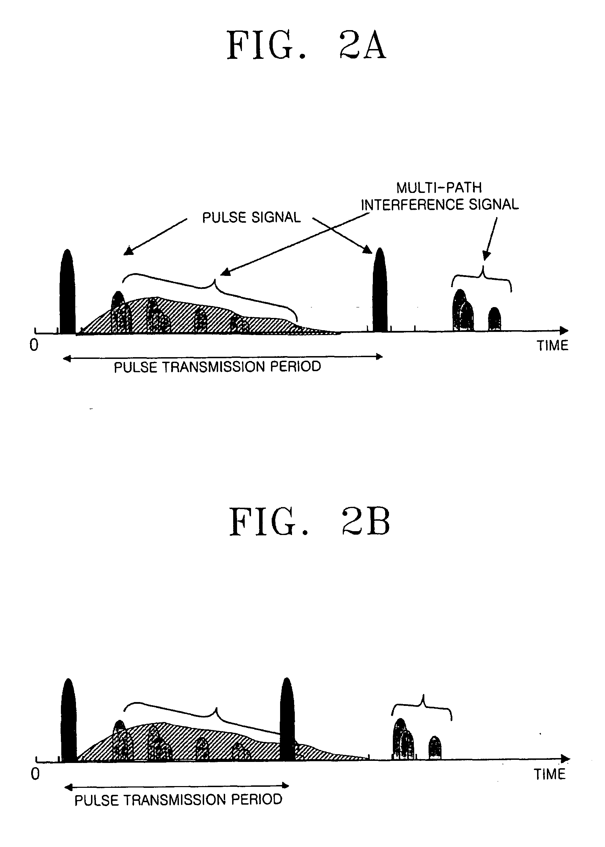

FIGS. 2A and 2B are views showing the inter-pulse interference in the temporal axis during the pulse communication.

Referring to FIG. 2A, the signal transmission period is set to be long enough, and there is no overlapping between the delayed multi-path signal and the original signal, and thus there is no interference. FIG. 2B shows the case where the pulse transmission period is shortened to increase the data transmission rate. In FIG. 2B, it is shown that the delayed multi-path signal overlaps with the original signal.

In the single band system, the pulse width is very short so that the inter-pulse interference problem is relatively small. However, in the multi-band system, the pulse width is increased and thus there are many problems related with interference due to indoor environment or interference among the networks.

While an acceptable data transmission rate is guaranteed in the multi-band system as a plurality of sub-bands of no interference is used, the system becomes complicated and costs also increase. Accordingly, there has been a continuous demand for a multi-band system which does not suffer interference-related problems by using sub-bands as little as possible.

SUMMARY

Accordingly, it is an exemplary aspect of the present invention to provide an ultra wideband (UWB) wireless transmitter and receiver capable of increasing transmission efficiency and reducing inter-pulse interference by using two independent UWB linear frequency modulated (FM) signals, and a method thereof.

In order to achieve the above exemplary aspects and/or other features of the present invention, there is provided an ultra wideband (UWB) wireless transmitter including a first pulse generator for modulating a data to be transmitted and outputting a first linear modulated signal, a second pulse generator for modulating the data to be transmitted and outputting a second linear modulated signal, an adder for adding the first and the second linear modulated signals, a pulse shaper for shaping the signal output from the adder, a carrier generator for outputting a carrier, a mixer for mixing the signal output from the pulse shaper with the carrier, a transmission unit for transmitting the signal output from the mixer, and a controller for controlling the modulation of the signal to be transmitted by controlling the operation of the first and the second pulse generators and the carrier generator.

The first and the second linear modulated signals share the same frequency band. The first linear modulated signal is within the frequency band with the frequency linearly increasing along the temporal axis, and the second linear modulated signal is within the frequency band with the frequency linearly decreasing along the temporal axis.

The controller performs the modulation independently of the respective sub bands of the frequency band where the signals to be transmitted are transmitted.

The controller determines one from among a first modulation method for operating the first pulse generator, a second modulation method for operating the second pulse generator and a third modulation method for operating both the first and the second pulse generators.

The controller determines one from among the first, the second and the third modulation methods according to the data transmission rate and performs the modulation according to the determined modulation method.

If a band drop is required under a multi-piconet environment where networks overlap, the controller selects either of the first and the second linear modulation methods so that the networks can each have different modulation methods.

The first and the second modulation methods are performed independently, or alternately along the temporal axis.

According to the present invention, an ultra wideband (UWB) wireless receiver includes a reception unit for receiving a UWB signal, an inverse carrier generator for generating an inverse carrier, a mixer for mixing the inverse carrier to remove the carrier from the received signal, a first matched filter for filtering the carrier-removed signal, a second matched filter for filtering the carrier-removed signal, a switch for outputting the carrier-removed signal to one among the first matched filter and the second matched filter, or to both the first matched filter and the second matched filter, a first detector for detecting an output signal from the first matched filter, a second detector for detecting an output signal from the second matched filter, a data processor for processing an output signal from the first and the second detectors, and a controller for controlling the demodulation of the received signals by controlling the carrier generator, the switch and the data processor.

The first and the second matched filters respond to a first linear modulated signal and a second linear modulated signal sharing the same frequency band, respectively, while responding to the other type of linear modulated signal as to a noise. The first linear modulated signal is within the frequency band with the frequency linearly increasing, and the second linear modulated signal is within the frequency band with the frequency linearly decreasing.

The controller controls the demodulation independently of the sub bands of the frequency band where the received signals are transmitted.

The controller determines corresponding linear modulation methods of the waveforms of the received signals to select one, or both of the first and the second matched filters to filter the received signal.

According to the present invention, an ultra wideband (UWB) wireless signal transmission method which modulates a UWB data to be transmitted and transmits the modulated UWB signal, is provided. The ultra wideband (UWB) wireless signal transmission method includes the steps of determining a transmission method, selecting a modulation method according to the transmission method as determined and the communication environment, modulating the signal to be transmitted according to the selected modulation method, shaping the modulated signal, mixing the shaped signal with a carrier and transmitting the signal.

The modulation method selecting step selects one, or both of a first linear modulation method and a second linear modulation method. The first linear modulation method uses a first linear modulated signal, with the frequency linearly increasing along the temporal axis within a predetermined frequency band, and the second linear modulation method uses a second modulated signal with the frequency linearly decreasing along the temporal axis within the predetermined frequency band.

For a higher data transmission rate, the transmission method determination step determines an alternate modulation in which the first and the second linear modulation methods are performed in an alternate order, or determines the third linear modulation method.

When networks overlap one another under a multi-piconet environment and subsequently require a band drop, the transmission method selecting step determines either the first or the second linear modulation method so as not to have interference between the networks.

BRIEF DESCRIPTION OF THE DRAWINGS

The above exemplary objects and other features of the present invention will become more apparent by describing in detail illustrative, nonlimiting embodiments thereof with reference to the attached drawings, in which:

FIG. 1 is a view illustrating pulse waveforms of a conventional multi-band system along a temporal axis;

FIGS. 2A and 2B are views illustrating inter-pulse interference occurring during the pulse communication along a temporal axis;

FIG. 3A is a view illustrating a wave packet of a linear FM signal;

FIG. 3B is a view illustrating a matched filter modulated signal with respect to the wave packet of FIG. 3A;

FIG. 4 is a block diagram of a UWB wireless transmitter for transmitting a modulated signal by using two independent linear FM signals according to the present invention;

FIG. 5 is a block diagram of a UWB wireless receiver for receiving and demodulating the signal which is modulated by using the two independent linear FM signals;

FIGS. 6A and 6B are views illustrating wave characteristics of the two independent linear FM signals of the same frequency band;

FIG. 7 is a view illustrating matched filter modulated signals with respect to the two independent linear FM signals;

FIG. 8 is a view illustrating the change of pulse frame structure on the temporal axis in accordance with the data increase;

FIG. 9 is a flowchart illustrating the operation of the UWB wireless transmitter transmitting the two independent linear FM signals according to the present invention for high speed data transmission;

FIG. 10 is a flowchart illustrating the operation of the UWB wireless transmitter transmitting the two independent linear FM signals according to the present invention for pulse control under multi-piconet environment; and

FIG. 11 is a flowchart illustrating the operation of the UWB wireless receiver transmitting the two independent linear FM signals according to the present invention for pulse control under multi-piconet environment.

DETAILED DESCRIPTION OF ILLUSTRATIVE EMBODIMENTS

Hereinafter, the present invention will be described in detail with reference to several illustrative embodiments and the accompanying drawings.

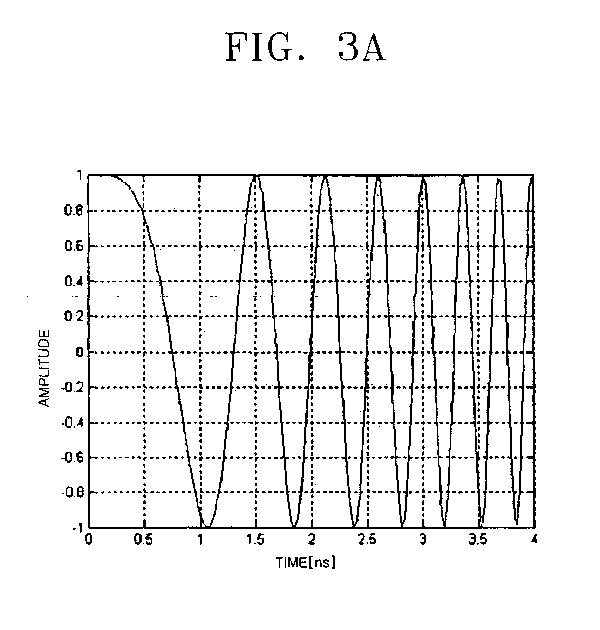

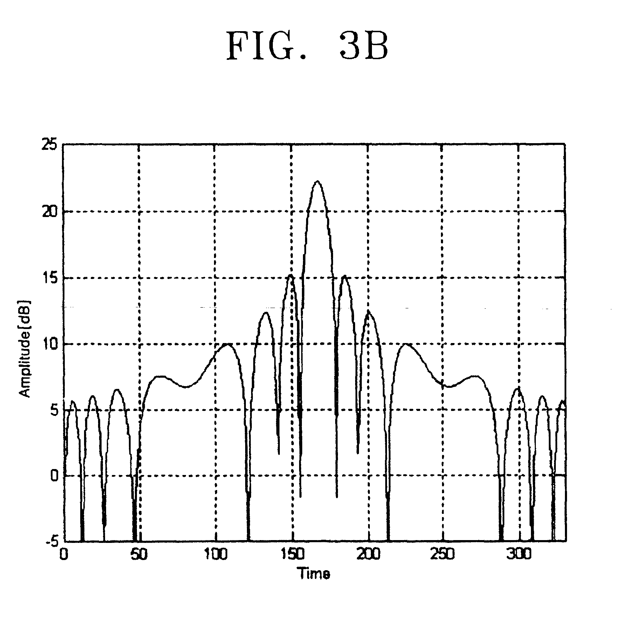

FIG. 3A is a view illustrating a wave packet of the linear FM signal, and FIG. 3B is a view illustrating a matched filter modulated signal with respect to the wave packet of FIG. 3A. The wave packet of the linear FM signal shown in FIG. 3A has a frequency characteristic of linearly increasing over time, and when received and demodulated at the receiver side, the signal waveforms usually draw the pattern as shown in FIG. 3B.

The linear frequency signal has a relatively low signal level, and is quite efficient to transmit UWB signals. As the linear frequency signal is easily realizable by hardware, it is especially economical.

The linear frequency modulated (FM) signal has a frequency characteristic that linearly varies along the temporal axis, and can be defined by the effective frequency band and the pulse width alone. This means that, if the same frequency band and same pulse width are used, the linear FM signals may not be distinguished from one another.

Accordingly, in order to increase the data transmission rate by using the linear FM signals, another type of variable is necessary. Further, in order to reduce inter-pulse interference under a multi-path environment, interference between the pulses sharing similar bands has to be reduced.

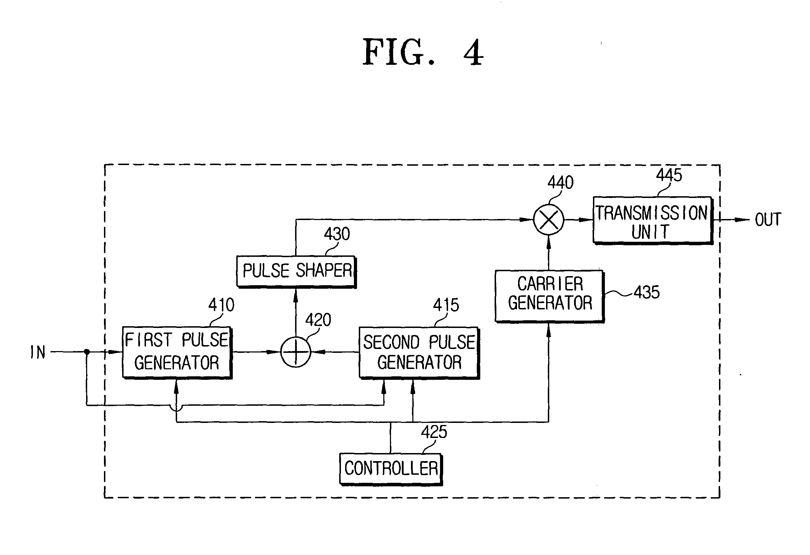

FIG. 4 is a block diagram of the UWB wireless transmitter which transmits the modulated signals using the two independent linear FM signals according to the present invention.

Referring to FIG. 4, the UWB wireless transmitter according to the present invention includes a first pulse generator 410, a second pulse generator 415, an adder 420, a pulse shaper 430, a carrier generator 435, a controller 425, a mixer 440 and a transmission unit 445.

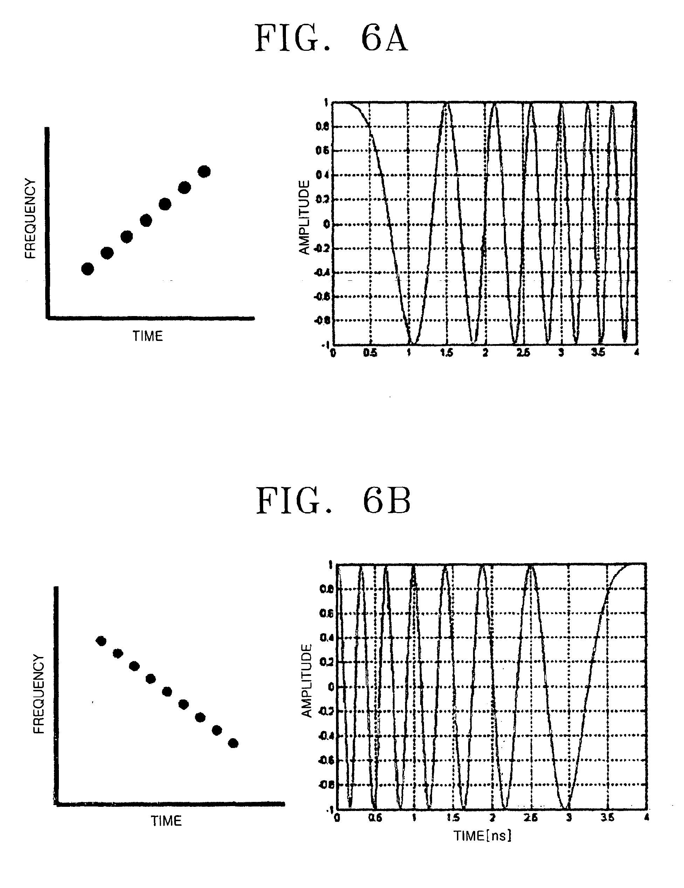

FIGS. 6A and 6B are views illustrating waveform characteristic of the two independent linear FM signals in the same frequency band. The linear FM signal shown in FIG. 6A is the up-pulse which has a frequency characteristic of linearly increasing over time, while the linear FM signal shown in FIG. 6B is the down-pulse which has a frequency characteristic of linearly decreasing over time.

The first pulse generator 410 modulates the data to be transmitted and outputs a first linear modulated signal. The first linear modulated signal is, as mentioned above with reference to FIG. 6A, an up-pulse having a frequency characteristic of linearly increasing over time. That is, the signal of FIG. 6A is a linear FM wave packet having positive (+) linear modulation. Such a linear FM wave packet, as shown in FIG. 6A, can be expressed in the time domain by the following equation:

[Equation 1]

$$f_u(t) = w(t)\exp[j(\omega_c t + \frac{B}{2T} t^2)], \ -1/2\,T < t < +1/2\,T$$

where, "$w(t)$" is a weight function, "$\omega_c$" is an intermediate frequency, "$B$" is a bandwidth of the pulse and "$T$" is a pulse appearing time period.

The second pulse generator 415 modulates the data to be transmitted and outputs a second linear modulated signal. The second linear modulated signal is, as shown in FIG. 6B, a down-pulse having a frequency characteristic of linearly decreasing over time. That is, the signal shown in FIG. 6B is a linear FM signal having a negative (-) linear modulation. Such a linear FM wave packet as shown in FIG. 6B can be expressed in the time domain by the following equation:

[Equation 2]

$$f_d(t) = w(t)\exp[j(\omega_c t - \frac{B}{2T} t^2)], \ -1/2\,T < t < +1/2\,T$$

where, "$w(t)$" is a weight function, "$\omega_c$" is an intermediate frequency, "$B$" is a bandwidth of the pulse and "$T$" is a pulse appearing time period.

The linear frequency wave packets, each expressed by the equations 1 and 2, are divided from each other by the increase and decrease of frequency according to time factor. It can be said that each linear frequency wave packet is obtained by differently distributing a single frequency band in the temporal axis. As mentioned above, *"f$_u$(t)"* is a pulse having a frequency characteristic gradually increasing with respect to the carrier, while *"f$_d$(t)"* is the pulse of a gradually decreasing frequency characteristic. Because these two linear FM wave packets have vector components of opposite arrangement along the temporal axis, although the FM wave packets share the same band, there is little interference or correlativity.

The adder 420 adds the first and the second linear modulated signals. The pulse shaper 430 shapes the signal output from the adder 420. The carrier generator 435 outputs the carrier. The mixer 440 mixes the output signal from the pulse shaper 430 with the carrier, and the transmission unit 445 transmits the signal from the mixer 440.

Meanwhile, the controller 425 controls the operation of the first and the second pulse generators 410, 415, and the carrier generator 435. The controller 425 selects the frequency modulation method. That is, the controller 425 drives the first pulse generator 410 or the second pulse generator, to generate the first linear modulated signal using the linear frequency wave packet having the positive (+) linear modulation, or to generate the second linear modulated signal using the linear frequency wave packet having the negative (-) linear modulation. Alternatively, the controller 425 may drive both the first and the second pulse generators 410, 415 to simultaneously generate the first and the second linear modulated signals together.

Hereinbelow, the way that the controller 425 drives the first pulse generator 410 to output the first pulse modulated signal is called a "first modulation", while the way that the controller 425 drives the second pulse generator 415 to output the second pulse modulated signal is called a "second modulation". The way that the controller 425 drives both the first and the second pulse generators 410, 415 to generate both the first and second linear modulated signals simultaneously is called a "third modulation".

Because only one of the first and the second pulse generators 410, 415 is driven in the first and the second modulations, the adder 420 is not operated. Accordingly, the pulse shaper 430 shapes the first modulated signal or the second modulated signal and outputs the resultant signal to the mixer 440. The first and the second modulations can be performed independently from each other, and can be performed in an alternate order along the temporal axis.

Meanwhile, the adder 420 is operated in the third modulation to add the first and the second linear modulated signals from the first and the second pulse generators 410, 415, and the pulse shaper 430 shapes the signal output from the adder 420.

In determining the way of transmission, the controller 425 may select one from among the first, the second and the third modulations in consideration of the increase/decrease of a data transmission rate and multipath characteristics. The controller 425 may also select the first and the second modulations in the temporal axis in an alternate way.

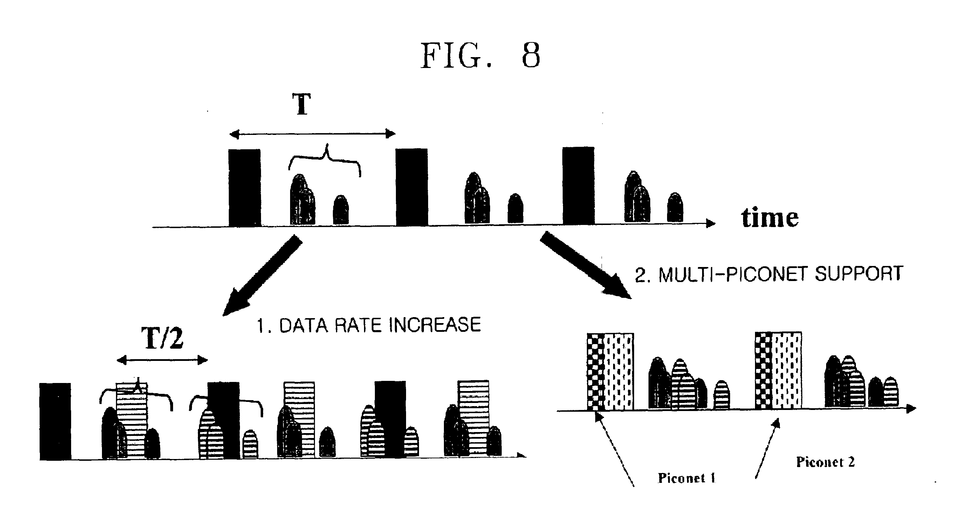

FIG. 8 is a view illustrating the change of pulse frame structure changing along the temporal axis in accordance with the data increase.

Referring to FIG. 8, the UWB wireless transmitter according to the present invention inserts the second modulated signal by the second modulation in between the periods T of the first modulated signal by the first modulation along the temporal axis so as to increase the data transmission rate. The signal period is accordingly reduced by "T/2", but the interference between the first and the second modulated signals is reduced. As a result, as the data transmission is not influenced by the interference of other signals or by multipath signals, the data transmission rate per hour can increase two times.

In an environment having different networks overlapping one another such as a multi-piconet, sub bands overlap one another and thus, a band drop is required. In this case, by switching the modulation of the bands either to first or to second modulation, the networks can each have an opposite modulation method and thus, there is no need to do the band drop and the operation can be smoothly performed without having any interference even in the shared frequency band. That is, FIG. 8 shows one piconet (piconet1) being overlapped with another piconet (piconet2). If the first piconet operates on the first modulation while the second piconet operates on the second modulation, there is no need for a band drop and the piconets can operate smoothly without having any interference.

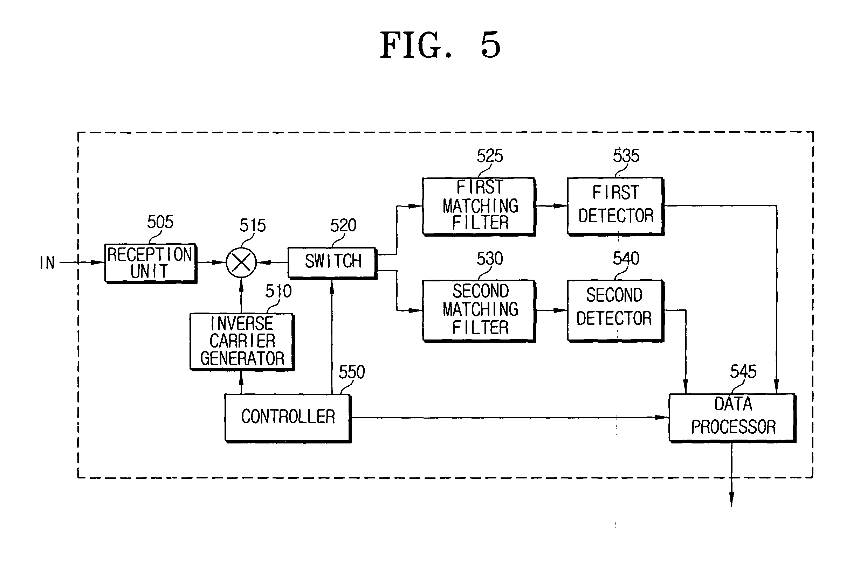

FIG. 5 is a block diagram of a UWB wireless receiver, which receives and demodulates a modulated signal by using two independent linear FM signals, according to the present invention. As shown, the UWB wireless receiver according to the present invention includes a reception unit 505, an inverse carrier generator 510, a mixer 515, a first matched filter 525, a second matched filter 530, a switch 520, a first detector 535, a second detector 540, a data processor 545 and a controller 550.

The reception unit 505 receives signals. The inverse carrier generator 510 generates an inverse carrier in order to remove the carrier carrying the received signals. The mixer 515 mixes the inverse carrier with the received signal in order to remove the carrier from the received signal.

The first matched filter 525 and the second matched filter 530 filter the carrier-removed signals. The first and second matched filters 525, 530 correspond to the first and second modulated signals, respectively, which means each responds strongly to the corresponding signal only but responds meekly to the other signals.

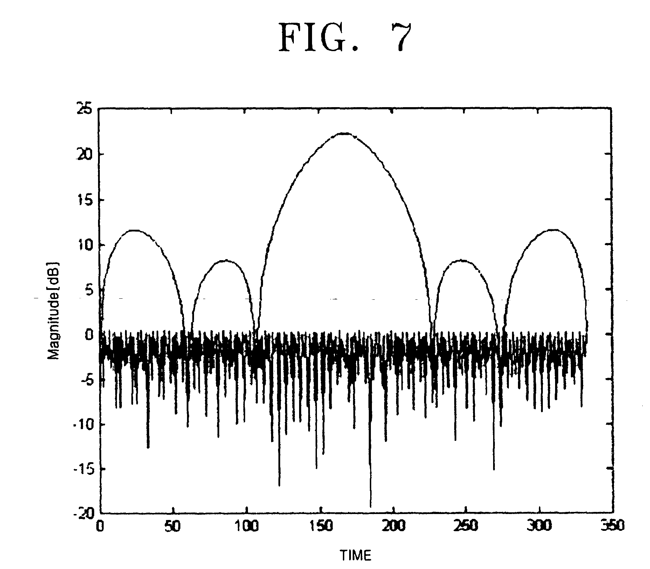

FIG. 7 is a view illustrating a matched filter demodulated signal corresponding to the two independent linear FM signals. Referring to FIG. 7, when receiving two linear FM signals, the matched filter responds strongly to one corresponding linear FM signal, while responding meekly to the other linear FM signal which is represented almost like a noise. With the first and second matched filters 525, 530 in use, the two type of pulses covering the same temporal and frequency region can be distinguished at the receiver side.

By the control of the controller 550, the switch 520 transmits the first and second modulated signals to the first and second matched filters 525, 530, respectively. When there is only the first modulated signal received, the first matched filter 525 is operated, while, when there is only the second modulated signal received, the second matched filter 530 is operated.

The first modulated signal, filtered by the first matched filter 525, is detected by the first detector 535, while the second modulated signal, filtered by the second matched filter 530, is detected by the second detector 540. The detected signals are processed at the data processor 545.

Meanwhile, the controller 550 controls the operation of the inverse carrier generator 510, the switch 520 and the data processor 545. The controller 550 controls the reception of signals in accordance with the number of used bands and intervals between pulse generation, and controls the demodulation of the received signals. The controller 550 determines the waveform of the received signals, and analyzes the frequency modulation method of the signals. Then the controller 550 controls the switch 520 such that the received signals are transmitted to the corresponding matched filter among the first and second matched filters 525, 530, or the signals are respectively transmitted to the first and second matched filters 525, 530.

When multi-band signals are received, the controller 550 controls the UWB wireless receiver to distinguish and detect the signal element by using the linear demodulation as described above.

Further, when there is a need for a band drop due to overlapping of sub bands under the network-overlapping environment such as a multi-piconet, the controller 550 notifies the corresponding UWB wireless transmitter of a request for a band drop, determines a reception method and controls the demodulation of the received signals. Accordingly, the UWB wireless transmitter switches its modulation method according to the operation of the controller 550, and accordingly modulates and transmits the signals.

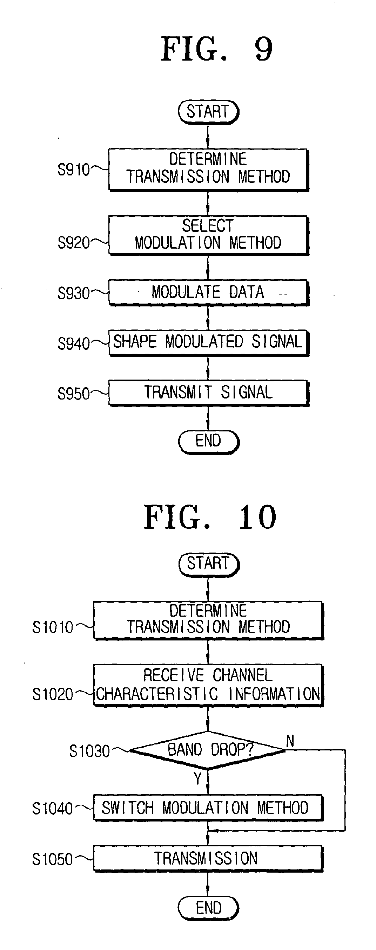

FIG. 9 is a flowchart illustrating the operation of the UWB wireless transmitter transmitting two independent linear FM signals for high speed data transmission according to the present invention.

Referring to FIG. 9, the controller 425 of the UWB wireless transmitter first determines the way of signal transmission for the wireless transmitter (S910).

As described earlier, the way of transmission can be determined such that the second modulated signals by second modulation are inserted in between the periods T of the first modulated signals by the first modulation along the temporal axis, so as to increase the data transmission rate two times. Alternatively, because the first and second modulated signals do not incur much interference, the two modulated signals may be transmitted at the same time.

Meanwhile, under the multi-piconet environment which usually requires a band drop due to overlapping of sub bands, the modulation method can be appropriately switched between the first and the second modulations so that there is no need to have a band drop when sending out the signals.

The controller 425 of the UWB wireless transmitter selects the modulation (S920). The controller 425 selects among the first, the second or the third modulation methods based on the transmission way determined at the transmission method determination step S910 and with reference to the changes to the communication environment.

The UWB wireless transmitter modulates the data to be transmitted according to the selected modulation method (S930). Accordingly, one or both of the first and second pulse generators 410, 415 may be operated to modulate the data. When the data is modulated by operating both the first and second pulse generators 410, 415, the first and second modulated signals output therefrom are added to each other.

Next, the UWB wireless transmitter shapes the modulated signal to meet the transmission method (S940), and mixes the shaped signal with the carrier and transmits the signal (S950).

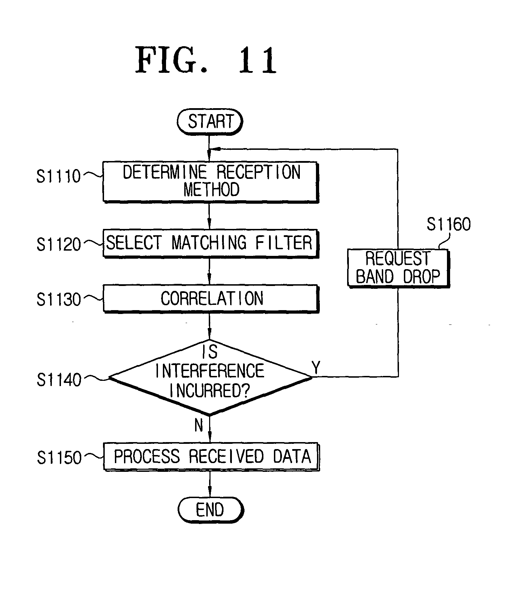

FIG. 10 is a flowchart illustrating the operation of a UWB wireless transmitter according to the present invention transmitting the two independent linear FM signals for the pulse control under a multi-piconet environment, and FIG. 11 is a flowchart illustrating the operation of the UWB wireless receiver, according to the present invention, receiving the two independent linear FM signals for pulse control under a multi-piconet environment.

Referring to FIG. 10, the UWB wireless transmitter, according to the present invention, determines the way to transmit the signals (S1010). The determination of the transmission method may be made in accordance with the transmission environment and the data transmission rate. Next, the UWB wireless transmitter receives channel characteristics from a corresponding wireless device, such as a receiver (S1020), and obtains necessary information about the channel characteristics. The information about the channel characteristics may include information about a band for a band drop by the wireless receiver.

The UWB wireless transmitter determines whether there has been a band drop at the wireless receiver based on the received channel characteristic information (S1030). When determining no band drop, the UWB wireless transmitter performs the predetermined modulation method and transmits the modulated signal (S1050). Otherwise, i.e., when determining any band drop, the UWB wireless transmitter switches the modulation method (S1040).

Referring to FIG. 11, the UWB wireless receiver according to the present invention first determines the way to receive the data and then receives the data (S 1110). The UWB wireless receiver demodulates the received signal according to the predetermined receiving method, and performs filtering either by selecting one from among the first and the second matched filters 525, 530 for operation, or by operating both of the first and the second matched filters 525, 530 together (S1120). If receiving plural signals, the UWB wireless receiver performs a correlation with respect to the filtered signals (S1130). Under the multi-piconet environment, where plural signals of the same modulation type are received at the same frequency, the correlativity is usually high.

Based on the correlativity, it is determined whether there has been any interference in the channel (S1140). If determining any interference in the channel, the UWB receiver performs a band drop, and notifies the communicating wireless transmitter about the request for the band drop (S1160). When it is determined that the band drop is not required, the UWB wireless receiver processes the received signals through demodulation (S1150).

According to the present invention, the UWB wireless transmitter and receiver use two matched filters, each responding strongly to a certain signal of corresponding modulation type while responding meekly to the other signal of non-corresponding modulation type. As a result, the data transmission rate can be increased greatly without having any inter-pulse interference even when the pulse intervals are reduced.

Further, even when the networks overlap under a multi-piconet environment and subsequently require a band drop, because the networks use different linear FM methods, respectively, interferences are reduced and communication efficiency is increased.

Although a few illustrative embodiments of the present invention have been described, it will be understood by those skilled in the art that the present invention should not be limited to the described illustrative embodiments, but various changes and modifications can be made within the spirit and scope of the present invention as defined by the appended claims.

**Claims**

1.  An ultra wideband (UWB) wireless transmitter, comprising:

    a first pulse generator for modulating data to be transmitted and outputting a first linear modulated signal;

    a second pulse generator for modulating the data to be transmitted and outputting a second linear modulated signal;
    an adder for adding the first linear modulated signal and the second linear modulated signal;
    a pulse shaper for shaping an added signal output from the adder;
    a carrier generator for outputting a carrier;
    a mixer for mixing a shaped signal output from the pulse shaper with the carrier;
    a transmission unit for transmitting a mixed signal output from the mixer; and
    a controller for controlling the modulation of a signal to be transmitted by controlling the operation of the first and the second pulse generators and the carrier generator.

2.  The UWB wireless transmitter of claim 1, wherein the first linear modulated signal and the second linear modulated signal share the same frequency band,
    wherein a frequency of the first linear modulated signal within the frequency band linearly increases along the temporal axis, and
    wherein a frequency of the second linear modulated signal within the frequency band linearly decreases along the temporal axis.

3.  The UWB wireless transmitter of claim 1, wherein the controller performs the modulation independently of one or more respective sub bands of the frequency band where one or more signals are transmitted.

4.  The UWB wireless transmitter of claim 1, wherein the controller determines one from among a first modulation method for operating the first pulse generator, a second modulation method for operating the second pulse generator and a third modulation method for operating both the first pulse generator and the second pulse generator.

5.  The UWB wireless transmitter of claim 4, wherein the controller determines one from among the first modulation method, the second modulation method and the third modulation method according to a data transmission rate and performs modulation according to the determined modulation method.

6.  The UWB wireless transmitter of claim 4, wherein, when a band drop is required under a multi-piconet environment where networks overlap, the controller selects either of the first modulation method and the second modulation method so that the networks can each have a different modulation method.

7.  The UWB wireless transmitter of claim 4, wherein the first modulation method and the second modulation method are performed independently, or in an alternating fashion along the temporal axis.

8. An ultra wideband (UWB) wireless receiver, comprising:

a reception unit for receiving a UWB signal;
an inverse carrier generator for generating an inverse carrier;
a mixer for mixing the inverse carrier to remove a carrier from the received UWB signal;
a first matched filter for filtering the carrier-removed signal;
a second matched filter for filtering the carrier-removed signal;
a switch for outputting the carrier-removed signal to the first matched filter, the second matched filter or both the first matched filter and the second matched filter;
a first detector for detecting a first output signal from the first matched filter;
a second detector for detecting a second output signal from the second matched filter;
a data processor for processing an output signal from one or both of the first detector and the second detector; and
a controller for controlling the demodulation of the received UWB signal by controlling the inverse carrier generator, the switch and the data processor.

9. The UWB wireless receiver of claim 8, wherein the first matched filter and the second matched filter respond to a first linear modulated signal and a second linear modulated signal sharing the same frequency band, respectively, while responding to the other type of linear modulated signal as to a noise,
wherein a frequency of the first linear modulated signal within the frequency band linearly increases, and
wherein a frequency of the second linear modulated signal within the frequency band linearly decreases.

10. The UWB wireless receiver of claim 8, wherein the controller controls the demodulation independently of one or more sub bands of the frequency band where the received one or more signals are transmitted.

11. The UWB wireless receiver of claim 8, wherein the controller determines corresponding linear modulation methods of the waveforms of the received UWB signal to select the first matched filter, the second matched filter, or both, to filter the received UWB signal.

12. An ultra wideband (UWB) wireless signal transmission method which modulates a UWB signal to be transmitted and transmits the modulated UWB signal, comprising:

determining a transmission method;
selecting a modulation method according to the determined transmission method and a communication environment;
modulating the UWB signal to be transmitted according to the selected modulation method;
shaping the modulated signal;
mixing the shaped signal with a carrier;
and transmitting the mixed signal.

13. The UWB wireless transmission method of claim 12, wherein the operation of selecting the modulation method includes selecting a first linear modulation method, a second linear modulation method, or both,
wherein the first linear modulation method uses a first linear modulated signal with a frequency linearly increasing along a temporal axis within a predetermined frequency band, and
wherein the second linear modulation method uses a second modulated signal with the frequency linearly decreasing along the temporal axis within the predetermined frequency band.

14. The UWB wireless transmission method of claim 12, wherein, for a higher data transmission rate, the operation of determining a transmission method includes determining an alternate modulation in which the first linear modulation method and the second linear modulation method are performed in an alternate order, or determining a third linear modulation method.

15. The UWB wireless transmission method of claim 12, wherein, when a plurality of networks overlap one another under a multi-piconet environment requiring a band drop, the operation of determining a transmission method includes determining either the first linear modulation method or the second linear modulation method so as not to have interference between the networks.

# FIG. 1

# FIG. 2A

# FIG. 2B

# FIG. 3A

# FIG. 3B

# FIG. 4

EP 1 489 754 A1

# FIG. 5

EP 1 489 754 A1

# FIG. 6A

# FIG. 6B

FIG. 7

FIG. 8

# FIG. 9

```
                    ┌─────────┐
                    │  START  │
                    └────┬────┘
                         │
         ┌──────────────────────────────┐
S910 ~   │        DETERMINE             │
         │    TRANSMISSION METHOD       │
         └──────────────┬───────────────┘
                         │
         ┌──────────────────────────────┐
S920 ~   │        SELECT                │
         │    MODULATION METHOD         │
         └──────────────┬───────────────┘
                         │
         ┌──────────────────────────────┐
S930 ~   │       MODULATE DATA          │
         └──────────────┬───────────────┘
                         │
         ┌──────────────────────────────┐
S940 ~   │    SHAPE MODULATED SIGNAL    │
         └──────────────┬───────────────┘
                         │
         ┌──────────────────────────────┐
S950 ~   │      TRANSMIT SIGNAL         │
         └──────────────┬───────────────┘
                         │
                    ┌─────────┐
                    │   END   │
                    └─────────┘
```

# FIG. 10

```
                    ┌─────────┐
                    │  START  │
                    └────┬────┘
                         │
         ┌──────────────────────────────┐
S1010 ~  │        DETERMINE             │
         │    TRANSMISSION METHOD       │
         └──────────────┬───────────────┘
                         │
         ┌──────────────────────────────┐
S1020 ~  │     RECEIVE CHANNEL          │
         │  CHARACTERISTIC INFORMATION  │
         └──────────────┬───────────────┘
                         │
                       ╱   ╲                N
S1030 ~          ╱  BAND DROP?  ╲───────────┐
                       ╲   ╱                │
                         │ Y                │
         ┌──────────────────────────────┐   │
S1040 ~  │   SWITCH MODULATION METHOD   │   │
         └──────────────┬───────────────┘   │
                         │←──────────────────┘
         ┌──────────────────────────────┐
S1050 ~  │       TRANSMISSION           │
         └──────────────┬───────────────┘
                         │
                    ┌─────────┐
                    │   END   │
                    └─────────┘
```

# FIG. 11

START

S1110 — DETERMINE RECEPTION METHOD

S1120 — SELECT MATCHING FILTER

S1130 — CORRELATION

S1140 — IS INTERFERENCE INCURRED?

Y → S1160 REQUEST BAND DROP

N

S1150 — PROCESS RECEIVED DATA

END

**European Patent Office**

**EUROPEAN SEARCH REPORT**

Application Number

EP 04 01 1561

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 198 20 836 A (NANOTRON GES FUER MIKROTECHNIK) 17 August 2000 (2000-08-17) | 1-3,8-10 | H04B1/69 |
| Y | * abstract; figures 1-3,8,11 * | 4-7, 13-15 | |
| | * column 4, line 47 - column 7, line 39 * <br> * column 21, line 29 - column 30, line 17 * <br> * column 38, line 66 - column 39, line 51 * <br> * column 41, line 14 - column 42, line 60 * | | |
| | ----- | | |
| X | KOWATSCH M, LAFFERL J: "A spread-spectrum concept combining chirp modulation and pseudonoise coding" IEEE TRANSACTIONS ON COMMUNICATIONS, vol. 31, no. 10, 30 October 1983 (1983-10-30), pages 1133-1142, XP002297651 | 1-3,8-10 | |
| Y | * abstract; figures 4,5 * | 4-7, 13-15 | |
| | * Sections I, II and III * | | |
| | ----- | | |
| X | CZYLWIK A: "Degradation of multicarrier and single carrier transmission with frequency domain equalization due to pilot-aided channel estimation and frequency synchronization" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 November 1997 (1997-11-03), pages 27-31, XP010254576 ISBN: 0-7803-4198-8 | 12 | |
| Y | * Sections I and II * | 4-7, 13-15 | |
| | ----- | | |
| | -/-- | | |

TECHNICAL FIELDS SEARCHED (Int.Cl.7)

H04B

The present search report has been drawn up for all claims

| Place of search | Date of completion of the search | Examiner |
|---|---|---|
| Munich | 24 September 2004 | Galli, P |

EPO FORM 1503 03.82 (P04C01)

**European Patent Office**

## EUROPEAN SEARCH REPORT

Application Number

EP 04 01 1561

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | AIELLO G R ED - THAL H (ED) INSTITUTE OF ELECTRICAL AND ELECTRONICS ENGINEERS: "Invited - challenges for ultra-wideband (UWB) CMOS integration" 2003 IEEE MTT-S INTERNATIONAL MICROWAVE SYMPOSIUM DIGEST.(IMS 2003). PHILADELPHIA, PA, JUNE 8 - 13, 2003, IEEE MTT-S INTERNATIONAL MICROWAVE SYMPOSIUM, NEW YORK, NY : IEEE, US, vol. VOL. 3 OF 3, 8 June 2003 (2003-06-08), pages 361-364, XP010644608 ISBN: 0-7803-7695-1 * Section Multi-Bands * ----- | 1-15 | |

TECHNICAL FIELDS SEARCHED (Int.Cl.7)

The present search report has been drawn up for all claims

| Place of search | Date of completion of the search | Examiner |
|---|---|---|
| Munich | 24 September 2004 | Galli, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 1561

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2004

| Patent document cited in search report | | Publication date | Patent family member(s) | | Publication date |
|---|---|---|---|---|---|
| DE 19820836 | A | 17-08-2000 | DE | 19646745 A1 | 20-05-1998 |
| | | | DE | 19820836 A1 | 17-08-2000 |
| | | | AU | 4258199 A | 23-11-1999 |
| | | | WO | 9957861 A1 | 11-11-1999 |
| | | | EP | 1076971 A1 | 21-02-2001 |
| | | | AT | 207266 T | 15-11-2001 |
| | | | AU | 724752 B2 | 28-09-2000 |
| | | | AU | 5306698 A | 29-05-1998 |
| | | | CA | 2269788 A1 | 14-05-1998 |
| | | | WO | 9820624 A1 | 14-05-1998 |
| | | | DE | 59705000 D1 | 22-11-2001 |
| | | | EP | 1126625 A1 | 22-08-2001 |
| | | | EP | 0938782 A1 | 01-09-1999 |
| | | | ES | 2163804 T3 | 01-02-2002 |
| | | | IL | 129434 A | 31-10-2003 |
| | | | JP | 2001503939 T | 21-03-2001 |
| | | | KR | 2000052914 A | 25-08-2000 |
| | | | US | 6614853 B1 | 02-09-2003 |

EPO FORM P0459

For more details about this annex : see Official Journal of the European Patent Office, No. 12/82